# EUROPÄISCHE PATENTSCHRIFT

(11) **EP 0 392 400 B1**
(45) Veröffentlichungstag und Bekanntmachung des Hinweises auf die Patenterteilung: **03.07.1996**
(21) Anmeldenummer: 90106700.9
(22) Anmeldetag: 06.04.1990
(51) Int. Cl.: C11D 3/08

(54) **Verfahren zur Herstellung eines feinteiligen, kristallinen Zeolithpulvers vom Typ 4A mit vorherbestimmbarer Korngrössenverteilung**
Process for the preparation of a finely divided cristalline type A zeolithe powder with predetermined gram size distribution
Procédé de préparation de poudre de zéolithe cristalline de type 4A finement divisée avec une répartition de grosseur des grains déterminée d'avance

(30) Priorität: 10.04.1989 CH 1350/89
(43) Veröffentlichungstag der Anmeldung: 17.10.1990
(73) Patentinhaber: LONZA AG, CH-4002 Basel (CH)
(72) Erfinder: Giltzau, Uwe, Dr., Dipl.-Chem., Jüchen (DE)
(74) Vertreter: Dannenberg, Gerda

(56) Entgegenhaltungen:
- EP-A- 0 013 417
- DE-A- 2 856 209
- DE-A- 3 015 415

## Beschreibung

Die vorgestellte Erfindung betrifft ein feinteiliges, kristallines Zeolithpulver vom TYP 4A mit vorherbestimmbarer Korngrössenverteilung, bestimmt als d₅₀-Wert von weniger als 3 µm ein Verfahren zu seiner Herstellung sowie seine Verwendung als Phosphatersatz in flüssigen Wasch-, Spül- und Reinigungsmitteln oder als Zusatz zu keramischen Glasuren und Fritten.

Molekularsiebe oder Zeolithe des Typs 4A sind Verbindungen aus Natriumoxid, Aluminiumoxid, Siliziumoxid und Wasser. Gemäss der Lehre des Patents US 2 882 243 werden sie mit der allgemeinen Formel
1,0± 0,2 M_{2/n}O : Al₂O₃ : xSiO₂ : yH₂O
beschrieben. Im vorliegenden Fall soll M identisch sein mit dem Natriumion, wobei n = 1 ist. x beträgt üblicherweise 1,85±0,5 und y kann abhängig von der vorangehenden Wärmebehandlung Werte zwischen 0 und 6 annehmen, wobei es üblicherweise einen Wert von ca. 5 annimmt.
Bei der Herstellung von Zeolithen des Typs 4A kommt es je nach dem angestrebten Einsatzbereich auf eine definierte Korngrössenverteilung an. Diese wird durch den d₅₀-Wert hinreichend charakterisiert, da er angibt, dass 50 Gew.% der vermessenen Probe aus Teilchen bestehen, die kleiner als der angegebene Wert sind. Die Messmethoden zur Bestimmung des d₅₀-Wertes sind sehr unterschiedlich und nicht in einfacher Weise miteinander vergleichbar. Im vorliegenden Patent wird bei der Angabe des d₅₀-Wertes von der Sedigraphen-Messmethode ausgegangen. Die Bezeichnungen Zeolith und Molekularsieb werden im Rahmen dieser Schrift synonym verwendet.

Zeolithe des Typs 4A mit einem d₅₀-Wert um 4 µm und ihre Herstellungsverfahren sind aus zahlreichen Patentschriften bekannt (DE 24 47 021, DE 25 17 218, DE-OS 26 51 419, DE-OS 26 51 420, DE-OS 26 51 436, DE-OS 26 51 445). Diese Materialien sind für den Einsatz in pulverförmigen Wasch- und Reinigungsmitteln als Phosphatersatz geeignet und zeigen üblicherweise ein Calciumbindevermögen, bestimmt nach DE-OS 24 12 837, von ca. 160 mg/g Zeolith.

Für den Einsatz in Flüssigwaschmitteln sind diese Pulver dagegen nicht oder nur bedingt geeignet, da sie aufgrund ihrer Teilchengrösse und ihrer physikalisch-chemischen Oberflächeneigenschaften sehr stark zur Sedimentation neigen, was während des Waschvorganges im Bereich von Minuten bis Stunden in der Regel kein Problem darstellt, eine längere Lagerung der formulierten Waschhilfsmittel jedoch nicht erlaubt. Um eine befriedigende Stabilität von Flüssigwaschmitteln zu erreichen, sollte die Teilchengrösse, gemessen als d₅₀-Wert, unter 3 µm, besser noch um 2 µm liegen, wodurch bei entsprechender Viskosität der Waschmittelsuspension eine hinreichend geringe Sedimentationsneigung erreicht wird. Insbesondere dürfen diese Zeolithe nicht den bei den bisher bekannten Herstellungsverfahren in der Regel entstehenden sogenannten Grit-Anteil (Teilchen grösser als 25 µm) enthalten.

In der bekannten Literatur wurden bisher nur wenige Verfahren beschrieben, um zu den vorgenannten feinteiligen Zeolithen zu gelangen. So beschreibt die JP-OS 55/127 498 und die DE-OS 26 52 409 ein Verfahren, das von einem natürlichen Mineral ausgeht. Hierbei wird das Mineral Smektit einer Säurebehandlung unterzogen, bis das vorhandene Silikatgerüst als aktiver, säureunlöslicher Laugungsrückstand nachbleibt. Dieser wird dann nach inniger Vermischung mit Natriumoxid, Aluminiumoxid oder Aluminiumhydroxid und Wasser hydrothermal umgesetzt und ergibt ein sehr feinteiliges Molekularsiebmaterial des Typs 4A. Es scheint möglich, den Produktionsprozess über den pH-Wert, die Temperatur und die Reaktionszeit so zu steuern, dass die gewünschte Korngrössenverteilung erreicht werden kann. Jedoch liefert das Verfahren der DE-OS 26 52 409 nur Produkte mit stark herabgesetzter Kristallinität und demzufolge mit wesentlich geringerem Calciumbindevermögen.

Weiterhin ist in der DE-PS 21 27 754 ein Verfahren zur Herstellung eines Zeolithpulvers des Typs 4A aus der bei der Aluminiumhydroxidherstellung nach dem Bayer-Verfahren anfallenden Klarlauge und technischer Wasserglaslösung beschrieben. Nach diesem Verfahren werden vorzugsweise Teilchen mit einem mittleren Durchmesser von 20 bis 30 µm erhalten, die insbesondere für Anwendungen als Trocknungsmittel oder Katalysatoren geeignet sind und gegebenenfalls mit Bindemitteln zu noch gröberen Körnern verbunden werden. Durch entsprechende Wahl der Verfahrensparameter ist es zwar auch möglich, Teilchengrössen unter 1 µm zu erzielen, jedoch weist das so hergestellte Material bei der Verwendung in Waschmitteln ein unbefriedigendes Calciumbindevermögen auf und neigt sehr stark zur Agglomeratbildung, die den Vorteil der geringen Teilchengrösse wieder zunichte macht.

In der DE-OS 28 56 209 wird ein Verfahren beschrieben, das die Bildung feinteiliger Zeolithe des Typs 4A beschreibt. Zur Erzielung einer Korngrössenverteilung unter 3 µm, gemessen als d₅₀-Wert, werden die Reaktanden gemischt und durch mechanische Hilfsmittel wie Düsen fein verteilt. Damit diese Düsen nicht durch die spontane Niederschlagsbildung bei der Reaktion von Natriumaluminatlösung mit Wasserglaslösung verstopfen, wird zu den beiden Reaktionslösungen Kaliumoxid zugesetzt, das zunächst fällungshemmend wirken soll. Der in der DE-OS 28 56 209 beschriebene Prozess wird vorzugsweise zweistufig gefahren, d.h. die Reaktionslösungen werden bei niedriger Temperatur zur Reaktion gebracht und anschliessend bei erhöhter Temperatur kristallisiert. Die nach diesem Verfahren hergestellten Molekularsiebe weisen in Waschmitteln ein Calciumbindevermögen von ca. 160 mg/g Zeolith auf.

Aufgabe der vorliegenden Erfindung ist es nun, die bestehenden spezifischen Nachteile der oben angeführten Verfahren zu vermeiden und ein einfaches Verfahren zur Herstellung von feinteiligen, kristallinen Zeolithen des Typs 4A mit hohem Calciumbindevermögen zu entwickeln. Als Basis dazu sollen preisgünstige Ausgangsprodukte wie Klarlauge aus dem Bayer-Verfahren für die Aluminiumhydroxidherstellung und technisches Natronwasserglas dienen. Das erfindungsgemäss hergestellte Zeolithpulver soll kristallin, phasenrein und frei von Grit-Anteilen sein und durch das angewendete Verfahren eine definiert einstellbare Korngrössenverteilung besitzen.

Erfindungsgemäss wird diese Aufgabe mit einem Verfahren nach Patentanspruch 1 gelöst.

Das erfindungsgemässe Verfahren geht von der Tatsache aus, dass eine Natriumaluminatlösung (Lösung I) und eine Natronwasserglaslösung (Lösung II) spontan unter Bildung eines amorphen Niederschlages miteinander reagieren. Dieser Niederschlag reift in Abhängigkeit von der Temperatur langsam zu einem kristallinen Zeolithpulver. Während des Reifungsprozesses vom amorphen zum kristallinen Zustand treten die für eine Umkristallisation üblichen Phänomene auf.

Bei dem erfindungsgemässen Verfahren wird durch die Bildung von Mikro-Agglomeraten Einfluss auf die Kristallisation genommen. Hierdurch kann das Ziel, nämlich die Bildung eines feinteiligen Zeolithpulvers, erreicht werden.
Die Bildung der Mikro-Agglomerate wird durch eine geeignete Konzentration der Lösungen I und II in Kombination mit einer feinen Zerteilung in Form von Tröpfchen eines definierten Grössenbereiches erzielt. Diese vorgeformten feinzerteilten Tröpfchen sind mit dem in ihnen enthaltenen ausfällbaren Feststoffgehalt die Basis für die Bildung des gleichmässig feinteiligen, kristallinen Zeolithpulvers.
Das erfindungsgemässe Verfahren hat den Vorteil, dass bereits durch die Bedingungen bei der Fällung die Teilchengrösse des Zeolithpulvers vorgeprägt und durch den Reifungsprozess definiert erreicht werden kann.
Als Na₂O und Al₂O₃ enthaltende Lösung I kann jede Lösung eingesetzt werden, die wenigstens 20 g/l Na₂O und wenigstens 130 g/l Al₂O₃ enthält, wobei das molare Verhältnis Na₂O:Al₂O₃ zweckmässig 1,3 bis 4,0 und vorzugsweise 1,40 bis 1,56 beträgt. Vorzugsweise wird als Lösung I die bei der Aluminiumhydroxidherstellung nach dem Bayer-Verfahren anfallende Klarlauge verwendet, die gegebenenfalls entsprechend zu verdünnen ist.
Als Na₂O und SiO₂ enthaltende Lösung II wird zweckmässig eine verdünnte Natronwasserglaslösung mit wenigstens 34,7 g/l Na₂O und wenigstens 119 g/l SiO₂, wobei das molare Verhältnis Na₂O: SiO₂ 0,25 bis 1,0 beträgt, eingesetzt. Vorzugsweise handelt es sich um technische Wasserglaslösung, die mit einer Dichte von ca. 1,36 kg/l handelsüblich ist und mit Wasser entsprechend verdünnt wird.
Für die notwendigen Verdünnungsschritte wird vorzugsweise Kondensat oder vollentsalztes Wasser eingesetzt.

Die Fällungsreaktion wird zweckmässig bei einer Temperatur von 70 bis 80°C, vorzugsweise bei ca. 75°C durchgeführt. Die für das erfindungsgemässe Verfahren wesentliche feine Zerteilung der Reaktanden erfolgt zweckmässig durch Einsatz einer oder mehrerer Düsen. In einer Ausführungsform des erfindungsgemässen Verfahrens wird hierbei die Lösung I vorgelegt und unter intensivem Rühren auf der für die Fällung erforderlichen Temperatur gehalten, während die Lösung II mit im wesentlichen gleicher Temperatur durch eine oder mehrere Düsen innerhalb von 0,5 bis 5 Stunden, vorzugsweise 2 bis 3 Stunden zugegeben wird. Als Düsen sind alle Aggregate geeignet, die es gestatten, bei der erforderlichen Durchflussmenge die Lösung zu Tröpfchen von ca. 0,05 mm mittlerem Durchmesser zu zerstäuben. Es können hierbei sowohl Einstoffdüsen, die mit der zu zerstäubenden Lösung beschickt werden, als auch Zweistoffdüsen, die die Zerstäubung durch ein gleichzeitig zugeführtes Hilfsmedium bewirken, verwendet werden. Die feine Zerstäubung kann auch durch Energiezufuhr in Form von Ultraschall erzielt werden. Vorzugsweise werden jedoch Zweistoffdüsen eingesetzt, die als Hilfsmedium verdichtete Luft einsetzen. Die Zufuhr der zerstäubten Lösung erfolgt vorzugsweise im Bereich des durch intensive Umwälzung der vorgelegten Lösung gebildeten Rührkegels.

In einer weiteren bevorzugten Ausführungsform wird die Lösung I derart umgewälzt, dass sie über eine geeignete Vorrichtung als Film abfliesst, während die zerstäubte Lösung II in diesen fliessenden Film eingedüst wird.
Die beschriebene Verfahrensweise erreicht durch die erfindungsgemässen Schritte eine problemlosere Herstellung einer feinteiligen Molekularsiebsuspension ohne Zusatz von Kalium. Durch die intensive Umwälzung der vorgelegten Lösung wird immer wieder frische noch nicht vollständig umgesetzte Lösung in den Bereich des eingetragenen, verdüsten Materials gebracht. Der möglichen Verstopfung der Verdüsungsaggregate wird durch die Verwendung nur einer Düse begegnet.
Die anschliessende Reifung erfolgt zweckmässig unter weiterhin intensivem Rühren bei einer Temperatur von 70 bis 80°C, vorzugsweise ca. 75°C, innerhalb von 3 bis 20 Stunden. Sie kann sowohl im Reaktionsgefäss, als auch in einem separaten Reifebehälter erfolgen.

Nach der Lehre der vorliegenden Erfindung erreicht man den angestrebten Zweck vor allem durch eine gute Temperaturkonstanz. Die Reaktionstemperatur sollte nach Möglichkeit um nicht mehr als ±2°C schwanken. Die bei der Niederschlagsbildung auftretende Wärmetönung von bis zu 6°C muss entsprechend abgeführt werden. Dies ist besonders wichtig, da oberhalb einer Temperatur von 83°C verstärkt mit der Sodalith-Bildung gerechnet werden muss. Hierbei handelt es sich um einen Grundbaustein des 4A Zeoliths, der jedoch selbst keine Ionenaustauschkraft besitzt und bei dessen Bildung daher trotz hoher Kristallinität kein zusätzliches Calciumbindevermögen erzielt wird.
Sobald die gewünschte Korngrössenverteilung erreicht ist, wird das kristalline Produkt durch Filtration von der Mutterlauge getrennt, gewaschen und dem vorgesehenen Verwendungszweck entsprechend in an sich bekannter Weise weiterverarbeitet. Das nach dem erfindungsgemässen Verfahren hergestellte Zeolithpulver des Typs 4A eignet sich gemäss der Aufgabe der Erfindung besonders für die Verwendung in flüssigen Wasch-, Spül- und Reinigungsmitteln und zeigt bei entsprechender Viskosität der Formulierung praktisch keine Sedimentationsneigung. Bei der Verdüsung einer Lösung können, trotz Verwendung von feinen Düsen mit einem Düsendurchmesser unter 1 mm, grobe Tropfen auftreten, die sich durch "Rekombination" aus feinen Tröpfchen ergeben. In diesen rekombinierten Tropfen ist dann soviel ausfällbarer Feststoff enthalten, dass zunächst beim Kontakt mit der vorgelegten, intensiv umgewälzten Lösung ein grosses amorphes Teilchen gebildet wird. Während des Reifeprozesses bilden sich hieraus üblicherweise verwachsene Kristalle, die aus mehreren kleinen Primärkristalliten aufgebaut sind. Diese bewirken den Aufbau des nicht erwünschten Grit-Anteils.
In einer Ausführungsform des erfindungsgemässen Verfahrens werden diese Kristallite durch eine Mahlung in einer Perlmühle, die die entsprechende Mahlkugelgrösse enthält, vernichtet. Diese Mahlung kann nach der Dosierung oder direkt nach der Reifezeit erfolgen.

Eine weitere bevorzugte Verwendung des nach dem erfindungsgemässen Verfahren hergestellten Zeolithpulvers ist seine Zugabe zu keramischen Massen, insbesondere zur Beeinflussung der Farbe von Glasuren und Fritten.

Im folgenden wird das erfindungsgemässe Verfahren beispielhaft erläutert, ohne dass dadurch Einschränkungen der Erfindung erfolgen sollen.

### Beispiel 1

In einem 200-l-Rührkessel wurden 90 l verdünnte Klarlauge, wie sie im Bayer-Prozess anfällt, mit einem Gehalt von 150 g/l Na₂O und 125 g/l Al₂O₃ (Lösung I) vorgelegt und auf 75°C temperiert. Die gleiche Menge ebenfalls auf 75°C temperierte verdünnte Natronwasserglaslösung mit einem Gehalt von 34,7 g/l Na₂O und 119,3 g/l SiO₂ (Lösung II) wurde in die mit einem Intensivrührer (Leitstrahlrührer Typ IKA Rototron RT 115 KT, Drehzahl 3000 U/min) intensiv umgewälzte, vorgelegte Klarlauge mittels einer Düse in den Bereich der grössten Fliessgeschwindigkeit eingedüst. Als Düse wurde eine Flachstrahldüse (Fa. Lechler, Typ 652. 404 17) eingesetzt. Die Dosierzeit betrug 2,5 Stunden.
Beim Kontakt der Lösung II mit der vorgelegten Lösung I bildete sich spontan ein amorpher Festkörper, der von der Stöchiometrie bereits dem gewünschten Zeolithen des Typs 4A entsprach, jedoch war die Kristallinität nicht ausreichend. Daher wurde ein Reifeprozess von 4 Stunden Dauer angeschlossen. Das ausgefällte Material wurde nach der Reifezeit durch Filtration von der Mutterlauge, die nur noch Na₂O und Al₂O₃, jedoch praktisch kein SiO₂ enthielt, getrennt und nach mehreren Waschstufen getrocknet.
Die erzielte Korngrössenverteilung, gemessen mit einem Sedigraphen als d₅₀-Wert, betrug 2,9 µm.
Das Calciumbindevermögen erreichte in dem angeführten Beispiel 167 mg CaO/g Zeolith.

### Beispiel 2

Der Versuchsaufbau und die Durchführung waren analog zum Beispiel 1, jedoch wurden nur 90% der im Beispiel 1 angegebenen Menge der Lösung II dosiert. Die Reifezeit erstreckte sich auf 20 Stunden.
Das filtrierte, gewaschene und getrocknete Material war wieder ein kristalliner Zeolith des Typs 4A und wies einen d₅₀-Wert von 2,0 µm auf.
Das Calciumbindevermögen dieses Materials betrug 170 mg CaO/g Zeolith.

### Beispiel 3

Es wurde wie im Beispiel 1 verfahren, jedoch betrug die vorgelegte Menge der Lösung I bei gleicher Verdünnung 140% der im Beispiel 1 verwendeten Menge.
Bei diesem Vorgehen erhielt man ein kristallines Material, das einen d₅₀-Wert von 1,5 µm aufwies.
Das Calciumbindevermögen betrug bei diesem Beispiel 161 mg CaO/g Zeolith.

### Beispiel 4

Es wurde wie im Beispiel 1 verfahren, jedoch wurde die Lösung II mittels einer Zweistoffdüse (Fa. Schlick, Typ 772-K-1) zerstäubt. Hierbei diente Pressluft mit einem Druck von 6 bar als Hilfsmedium, um die Bildung feiner Tröpfchen hervorzurufen. Nach einer Reifezeit von 5 Stunden erhielt man ein Zeolithmaterial des Typs 4A mit einem d₅₀-Wert von 2,9 µm. Das Calciumbindevermögen dieses Materials wurde zu 163 mg CaO/g Zeolith bestimmt.

### Beispiel 5 (Vergleichsbeispiel)

Es wurde wie im Beispiel 1 verfahren, jedoch betrug die eingestellte Temperatur der Lösungen I und II jetzt 85°C. Nach der notwendigen Dosier- und Reifezeit erhielt man ein kristallines Produkt, das neben dem Zeolith 4A mit einem d₅₀-Wert von 2,8 µm auch unerwünschte Anteile von Sodalith enthielt. Das Calciumbindevermögen dieses Materials betrug 110 mg CaO/g Zeolith.

## Patentansprüche

1. Verfahren zur Herstellung eines feinkristallinen zeolithpulvers vom Typ 4A, dadurch gekennzeichnet, dass in eine vorgelegte Na₂O und Al₂O₃ enthaltende wässrige Lösung I mit den molaren Verhältnissen Na₂O:Al₂O von 1,3 bis 4,0:1 und H₂O:Na₂O von 20 bis 40 eine Na₂O und SiO₂ enthaltende wässrige Lösung II mit den molaren Verhältnissen von Na₂O:SiO₂ von 0,25 bis 1 und H₂O:Na₂O von 70 bis 150:1 bei einer Temperatur von 70 bis 80°C unter Verwendung wenigstens einer Düse eingesprüht und anschliessend das spontan ausfallende Material in der Mutterlauge bei einer Temperatur von 70 bis 80°C so lange einer Reifung unterzogen wird, bis eine Korngrössenverteilung, bestimmt als d₅₀-Wert, von nicht mehr als 3 µm erreicht ist.

2. Verfahren nach Patentanspruch 1, dadurch gekennzeichnet, dass die verwendete Lösung I überwiegend aus der bei der Aluminiumhydroxidherstellung nach dem Bayer-Prozess anfallenden Klarlauge besteht.

3. Verfahren nach mindestens einem der Ansprüche 1 bis 2, dadurch gekennzeichnet, dass die verwendete Lösung II aus technischer Natronwasserglaslösung mit einer Dichte von 1,3 bis 1,4 kg/l besteht.

4. Verfahren nach mindestens einem der Patentansprüche 1 bis 3, dadurch gekennzeichnet, dass zur innigen Vermischung der Reaktanden die Lösung I intensiv gerührt und die Lösung II durch ein Verdüsungssystem vor dem Kontakt fein verteilt wird und zielgerichtet in den Rührkegel der Lösung I eingetragen wird.

5. Verfahren nach mindestens einem der Patentansprüche 1 bis 3, dadurch gekennzeichnet, dass die vorgelegte Lösung I über eine Vorrichtung als Film abfliessen kann und die versprühte Lösung II in den fliessenden Film eingedüst wird.

6. Verfahren nach Patentanspruch 4 oder 5, dadurch gekennzeichnet, dass zur Feinverteilung der Lösung II ein Hilfsmedium eingesetzt wird, welches eine optimale Zerstäubung der Lösung bewirkt.

7. Verfahren nach Patentansprüchen 1 und 6, dadurch gekennzeichnet, dass als Hilfsmedium Pressluft eingesetzt wird.

8. Verfahren nach Patentansprüchen 1 und 6, dadurch gekennzeichnet, dass als Hilfsmedium für die Zerstäubung Ultraschall eingesetzt wird.

9. Verwendung des nach dem Verfahren gemäß Patentanspruch 1 erhältlichen Zeolithpulvers in keramischen Glasuren und Fritten.

## Claims

1. Process for the preparation of a finely-crystalline zeolite powder of type 4A, characterized in that an aqueous solution II containing Na₂O and SiO₂ and having molar ratios of Na₂O:SiO₂ ranging from 0.25 to 1 and of H₂O:Na₂O ranging from 70 to 150:1 is sprayed, at a temperature ranging from 70 to 80°C and using at least one nozzle, into a previously charged aqueous solution I containing Na₂O and Al₂O₃ and having molar ratios of Na₂O:Al₂O₃ ranging from 1.3 to 4.0:1 and of H₂O:Na₂O ranging from 20 to 40, and subsequently the spontaneously precipitating material is subjected to maturation in the mother liquor at a temperature ranging from 70 to 80°C until a grain-size distribution, determined as d₅₀-value, of not more than 3µm is obtained.

2. Process according to claim 1, characterized in that the solution I employed predominantly consists of the clear lye obtained during the preparation of aluminium hydroxide according to the Bayer-process.

3. Process according to at least one of claims 1 to 2, characterized in that the solution II employed consists of an industrial soda waterglass solution having a density of from 1.3 to 1.4 kg/l.

4. Process according to at least one of claims 1 to 3, characterized in that for an intimate mixing of the reactants the solution I is vigorously stirred and the solution II is finely dispersed before the contact by means of a nozzle atomization system and is directly introduced into the vortex caused by the agitation of solution I.

5. Process according to at least one of claims 1 to 3, characterized in that the previously charged solution I can run off in the form of a film over a device and that the atomized solution II is sprayed into the running film.

6. Process according to claims 4 or 5, characterized in that for finely dispersing solution II an auxiliary medium is used which effects optimum atomization.

7. Process according to claims 1 and 6, characterized in that compressed air is employed as the auxiliary medium.

8. Process according to claims 1 and 6, characterized in that ultrasound is employed as the auxiliary medium for atomization.

9. Use of the zeolite powder obtainable by the process according to claim 1 in ceramic glazes and frits.

## Revendications

1. Procédé pour la préparation d'une poudre de zéolithe cristalline de type 4A, caractérisé en ce que l'on pulvérise dans une solution aqueuse I contenant Na₂O et Al₂O₃, ayant des rapports molaires Na₂O:Al₂O₃ de 1,3 à 4,0:1 et H₂O:Na₂O de 20 à 40, une solution aqueuse II contenant Na₂O et SiO₂, avec les rapports molaires de Na₂O:SiO₂ de 0,25 à 1 et H₂O:Na₂O de 70 à 150:1 à une température de 70 à 80°C, en utilisant au moins une buse ou tuyère, et consécutivement, on soumet le produit précipitant spontanément dans la lessive mère à une température de 70 à 80°C, à une maturation jusqu'à l'obtention d'une répartition granulométrique, déterminée en temps que valeur d₅₀, ne dépassant pas 3 µm.

2. Procédé selon la revendication 1, caractérisé en ce que la solution utilisée I, consiste de façon prédominante en la lessive limpide produite lors de la préparation d'hydroxyde d'aluminium, selon le procédé Bayer.

3. Procédé selon au moins l'une des revendications 1 à 2, caractérisé en ce que la solution II utilisée consiste en une solution de silicate de soude, selon une densité de 1,3 à 1,4 kg/l.

4. Procédé selon au moins l'une des revendications 1 à 3, caractérisé en ce que pour le mélange intime des réactifs on agite la solution I de façon intensive, et l'on divise finement la solution II par un système d'atomisation ou de diffusion par gicleur avant le contact, et que l'on introduit de façon ciblée dans le cône d'agitation de la solution I.

5. Procédé selon au moins l'une des revendications 1 à 3, caractérisé en ce que la solution I mise en oeuvre, peut s'écouler par l'intermédiaire d'un dispositif sous forme de film, et la solution pulvérisée II est introduite par atomisation dans le film s'écoulant.

6. Procédé selon la revendication 4 ou 5, caractérisé en ce que pour la division fine de la solution II on utilise un moyen auxiliaire qui provoque une atomisation optimum de la solution.

7. Procédé selon les revendications 1 et 6, caractérisé en ce que l'on utilise de l'air comprimé en tant que moyen auxiliaire.

8. Procédé selon les revendications 1 et 6, caractérisé en ce que l'on utilise les ultrasons en tant que moyen auxiliaire pour l'atomisation.

9. Utilisation de la poudre de zéolithe obtenue selon le procédé de la revendication 1, dans les glaçures et frittes de céramique.
